# FASCICULE DE BREVET EUROPEEN

(11) **EP 2 155 547 B1**
(45) Date de publication et mention de la délivrance du brevet: **23.02.2011**
(21) Numéro de dépôt: 08750951.9
(22) Date de dépôt: 15.05.2008
(51) Int. Cl.: B63H 25/46

(54) **DISPOSITIF REDUISANT LA PENETRATION D'UN FLUIDE DANS UN CANAL**
VORRICHTUNG ZUM VERRINGERN DES EINDRINGENS EINES FLUIDS IN EINEN KANAL
DEVICE REDUCING THE PENETRATION OF A FLUID INTO A DUCT

(30) Priorité: 13.06.2007 CH 937072007
(43) Date de publication de la demande: 24.02.2010
(73) Titulaire: DRS Drag Reduction Systems SA, Port Louis (MU); MAGISING PTE LTD., Singapore 068897 (SG)
(72) Inventeur: BRULHART, Yvan, CH-1297 Founex (CH)
(74) Mandataire: Micheli & Cie SA
(86) Numéro de dépôt international: PCT/IB2008/001210
(87) Numéro de publication internationale: WO 2008/152460

(56) Documents cités:
- DE-A1- 2 160 616
- DE-B- 1 182 550
- DE-B1- 2 746 853
- US-A- 2 356 301

## Description

La présente invention a pour objet un dispositif diminuant fortement, voire même évitant la pénétration d'un fluide, généralement un liquide, dans un canal. En particulier, l'invention concerne un dispositif permettant, pendant l'avancement normal d'un navire, de diminuer fortement ou d'éviter la pénétration de l'eau dans le canal d'un propulseur d'étrave de ce navire. La présence d'un logement, d'un renfoncement et bien entendu d'un canal de propulseur d'étrave perturbe grandement la marche normale des bateaux et navires qui en sont équipés, car cette discontinuité de la coque du navire provoque des remous, des turbulences et une traînée importante réduisant la vitesse de déplacement du navire et absorbant une grande quantité de l'énergie de propulsion.

Pour éviter ces inconvénients on a proposé d'obturer, pendant la marche normale du navire, les orifices de la coque donnant accès au canal transversal dans lequel sont logés le ou les propulseurs d'étrave, à l'aide de volets coulissant ou pivotant commandés par des moteurs. Ces systèmes sont non seulement onéreux mais encore très fragiles, car leur bon fonctionnement peut être entravé par des algues, des débris de toutes sortes et nécessitent donc un entretien fréquent et difficile.

Le document US 2356301, qui est considéré comme étant l'état de la technique le plus proche, décrit un ramasseur d'eau pour un propulseur à jet d'eau.

Le but de la présente invention est de proposer un dispositif de contrôle du flux de fluide passant devant un ou des orifices de la coque d'un navire notamment aux orifices donnant accès au canal transversal renfermant le ou les propulseurs d'étrave, pour réduire le volume de fluide s'écoulant le long de la coque du navire pendant sa marche normale entrant ou sortant de ce canal pour diminuer fortement ou éviter tous phénomènes de remous, traînée ou turbulence qui soit simple, robuste et ne demande que peu ou pas d'entretien. Un objectif de la présente invention est la réalisation d'un tel dispositif de contrôle du flux de fluide passant devant un orifice ou une cavité de la coque d'un navire.

La présente invention a pour objet un dispositif de contrôle du fluide passant devant des orifices de la coque d'un navire notamment ceux donnant accès au canal transversal renfermant le ou les propulseurs d'étrave tendant à obvier aux inconvénients des dispositifs existant précités et permettant la réalisation du but énoncé plus haut. Ce dispositif de contrôle du flux de fluide passant devant un orifice ou une cavité de la coque d'un navire se distingue par les caractéristiques énumérées à la revendication 1.

Le dessin annexé illustre schématiquement et à titre d'exemple une forme d'exécution du dispositif selon l'invention.

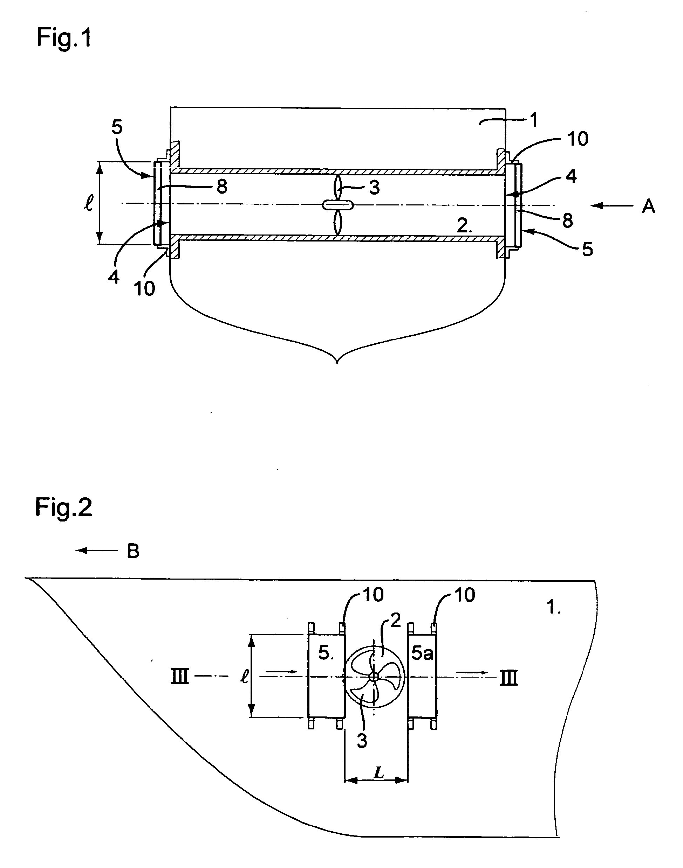

La figure 1 est une coupe partielle schématique verticale perpendiculaire à l'axe longitudinal du navire passant par l'axe du canal de propulseur d'étrave.
La figure 2 est une vue partielle de la coque du navire suivant la fèche A de la figure 1.

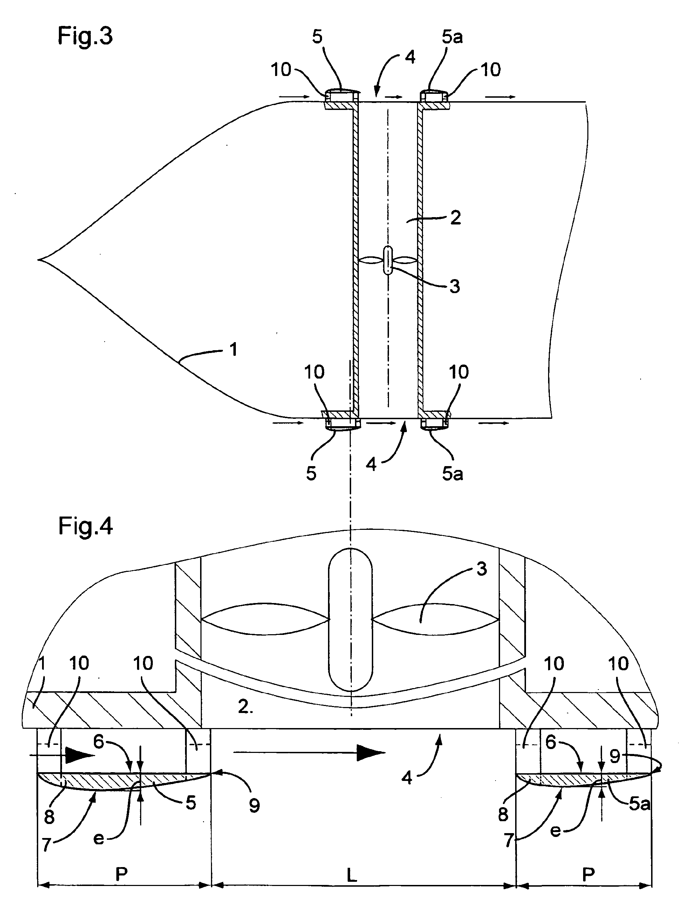

La figure 3 est une coupe suivant la ligne III-III de la figure 2.
La figure 4 est un détail en coupe à plus grande échelle illustrant le dispositif.

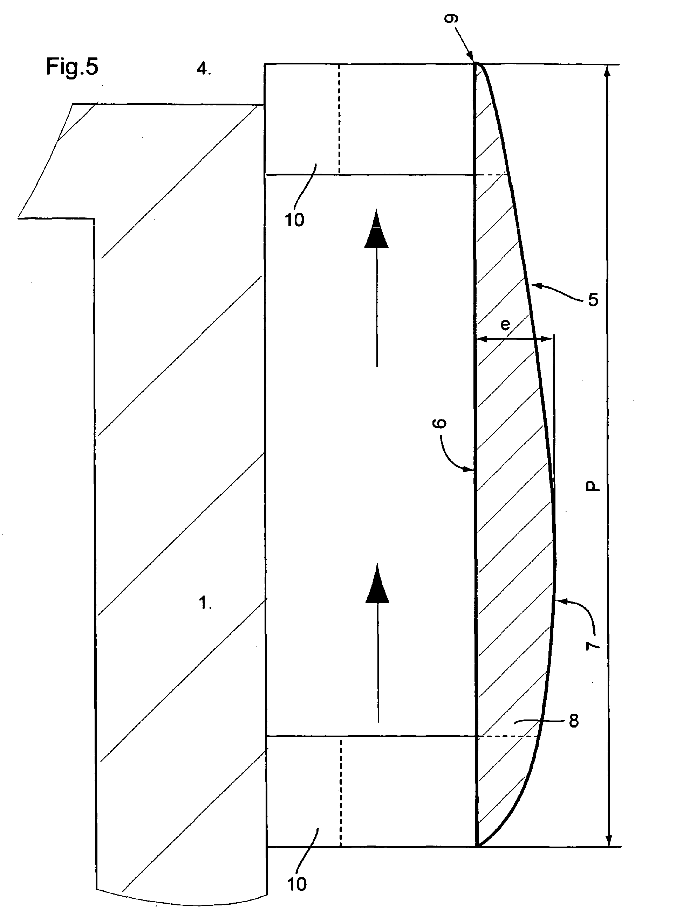

La figure 5 illustre à plus grande échelle en coupe transversale les formes d'un déflecteur.

Sur le dessin annexé on a représenté très schématiquement la coque 1 d'un navire traversée transversalement par un canal d'étrave 2 dans lequel sont montés un ou plusieurs propulseurs d'étrave 3. Ce canal d'étrave 2 comporte à ses extrémités des orifices 4 traversant la coque 1 du navire et débouchant en pleine eau. La section de ce canal d'étrave 2 est généralement circulaire et ses extrémités peuvent être évasées. Le canal d'étrave 2 est rempli du fluide entourant la coque 1 du navire. Lorsque le navire manoeuvre pour son accostage par exemple ou pour quitter sa position à quai, le propulseur d'étrave 3 est mis en marche provoquant un déplacement du fluide contenu dans le canal d'étrave transversalement à l'axe longitudinal du navire ce qui permet de déplacer celui-ci pour l'approcher ou l'éloigner d'un quai d'amarrage.

Lorsque le navire navigue normalement le propulseur d'étrave est stoppé et si rien n'est prévu des turbulences sont créées à proximité des ouvertures ou orifices 4 du canal d'étrave, turbulences qui créent une traînée importante. Cette traînée est la cause d'une diminution de la vitesse du navire et entraîne une surconsommation de carburant pour propulser le navire.

Le dispositif selon l'invention a pour but de contrôler l'écoulement de fluide passant devant les orifices 4 du canal d'étrave 2 pour réduire ou éviter la pénétration du fluide dans ce canal 2 et réduire ou supprimer toute turbulence et traînée dues à l'écoulement du fluide devant ces orifices 4.

Ce dispositif de contrôle de l'écoulement du fluide devant l'orifice du canal d'étrave 4 de la coque 1 d'un navire comporte au moins un déflecteur 5 fixé rigidement sur la coque 1 du navire en amont de l'orifice 4 et s'étendant sur une distance supérieure ou au moins égale au diamètre de cet orifice 4. Ce déflecteur 5 présente en coupe transversale une face interne plane 6 disposée en regard de la coque 1 du navire et une face externe 7 bombée. L'épaisseur des déflecteurs croît fortement dans sa partie amont 8 pour décroître lentement en direction de sa partie aval pour se terminer de façon très effilée formant une arête aval 9.

Ce déflecteur 5 est fixé rigidement sur la coque 1 du navire à l'aide de supports 10 soudés, boulonnés ou fixés de toute autre façon sur la coque 1 du navire.

De préférence, le dispositif comporte deux déflecteurs 5 disposés de part et d'autre de l'orifice 4 du canal d'étrave 2. Dans ce cas la distance L séparant l'arête aval 9 du déflecteur amont 5 de l'arête amont du déflecteur aval 5a est sensiblement égale, légèrement inférieure ou supérieure, au diamètre de l'orifice 4 du canal d'étrave 2.

La surface plane interne 6 des déflecteurs 5 et 5a est sensiblement parallèle à la coque 1 du navire. Dans une variante d'exécution, la face interne 6 du déflecteur amont 5 forme un léger angle avec la surface de la coque 1 du navire de sorte que son arête aval 9 est plus éloignée de cette coque que ne l'est son bord avant. Dans ce cas, le bord avant du déflecteur aval 5a est plus proche de la coque 1 du navire que ne l'est l'arête aval 9 de ce déflecteur aval 5a.

Ainsi le passage ménagé entre le déflecteur amont 5 et la coque va en s'élargissant en direction de l'orifice 4 et en se rétrécissant pour le déflecteur aval 5a.

Dans le cas où le dispositif de contrôle du flux de fluide ne comporte qu'un seul déflecteur, le déflecteur aval 5a est supprimé.

En admettant un orifice d'étrave présentant un diamètre de l'ordre de 1m, la longueur l du ou des déflecteurs 5 serait de l'ordre de 1,1 m, sa profondeur P de l'ordre de 15 à 40 cm et son épaisseur e de l'ordre de 15 à 30mm.

Lorsque le dispositif comporte deux déflecteurs, l'un amont 5 et l'autre aval 5a, la profondeur P du déflecteur amont est de préférence plus grande que celle du déflecteur aval.

Lorsque le navire avance suivant la direction de la flèche B, à partir d'une certaine vitesse, vitesse qui est inférieure à la vitesse de croisière du navire, l'écoulement de fluide entre le ou les déflecteurs 5 et la coque 1 du navire est contrôlé et réorganisé, il devient uniforme et maîtrisé et forme un mur liquide devant l'orifice 4 du canal d'étrave empêchant le fluide de s'introduire dans celui-ci ou tout au moins diminuant fortement la pénétration de fluide dans ledit orifice. Ceci permet de réduire ou de supprimer les turbulences du fluide à ce niveau et de réduire très sensiblement la traînée du navire.

Le dispositif selon l'invention est simple, peu onéreux, fixe sur la coque du navire et ne nécessite que peu d'entretien tout en permettant d'éviter la traînée et les turbulences du fluide dues à la présence des orifices de canal d'étrave et donc de diminuer la résistance à l'avancement du navire.

Le dispositif décrit peut être utilisé pour contrôler le flux de fluide passant devant n'importe quel type d'orifice ou de cavité formé dans la coque d'un navire.

## Revendications

1. Dispositif de contrôle du flux de fluide passant devant un orifice ou une cavité pratiquée dans la coque d'un navire, **caractérisé par le fait qu'**il comporte au moins un déflecteur (5) apte à être fixé rigidement sur la paroi du navire en amont de l'orifice ou de la cavité; **par le fait que** ce déflecteur comporte une face interne plane dirigée vers la coque du navire et une face externe incurvée fortement bombée en amont et effilée en aval.

2. Dispositif selon la revendication 1, **caractérisé par le fait qu'**il comporte un second déflecteur de forme semblable au premier disposé en aval de l'orifice ou de la cavité.

3. Dispositif selon l'une des revendications 1 ou 2, **caractérisé par le fait que** la face interne plane du déflecteur est parallèle à la coque du navire.

4. Dispositif selon l'une des revendications 1 ou 2, **caractérisé par le fait que** la face interne plane du déflecteur forme un angle avec la coque du navire de manière à créer un espace entre cette face et la coque allant en se rétrécissant ou en augmentant en direction de l'orifice ou de la cavité.

5. Dispositif selon la revendication 2, **caractérisé par le fait que** la distance séparant les déflecteurs amont et aval est sensiblement égale au diamètre de l'orifice ou de la cavité.

## Claims

1. Device for controlling the flow of fluid passing in front of an orifice or cavity produced in the hull of a vessel, **characterised in that** it has at least one deflector (5) suitable to be rigidly fixed to the wall of the vessel upstream of the orifice or cavity; **in that** this deflector has a planar inner face directed towards the hull of the vessel and a curved outer face which is highly convex upstream and tapered downstream.

2. Device as claimed in claim 1, **characterised in that** it has a second deflector of a similar shape to the first, disposed downstream of the orifice or cavity.

3. Device as claimed in any one of claims 1 or 2, **characterised in that** the planar inner face of the deflector is parallel to the hull of the vessel.

4. Device as claimed in any one of claims 1 or 2, **characterised in that** the planar inner face of the deflector forms an angle with the hull of the vessel so as to create a space between this face and the hull which narrows or increases in the direction of the orifice or cavity.

5. Device as claimed in claim 2, **characterised in that** the distance separating the upstream and downstream deflectors is substantially equal to the diameter of the orifice or cavity.

## Patentansprüche

1. Vorrichtung zur Steuerung des Fluidstroms, der eine Öffnung oder einen Hohlraum durchläuft, die (der) in einem Schiffsrumpf vorgesehen ist, **dadurch gekennzeichnet, dass** sie mindestens einen Ablenker (5) umfasst, der geeignet ist, vor der Öffnung oder dem Hohlraum starr an der Schiffswand befestigt zu werden; **dadurch**, dass der Ablenker eine plane innere Fläche aufweist, die zum Schiffsrumpf hin gerichtet ist, und eine gekrümmte äußere Fläche, die vorne stark ausgebaucht und hinten zugespitzt ist.

2. Vorrichtung nach Anspruch 1, **dadurch gekennzeichnet, dass** sie einen zweiten Ablenker umfasst, dessen Form der der Ersteren entspricht und das hinter der Öffnung oder dem Hohlraum angeordnet ist.

3. Vorrichtung nach Anspruch 1 oder 2, **dadurch gekennzeichnet, dass** die plane innere Fläche des Ablenkers parallel zum Schiffsrumpf liegt.

4. Vorrichtung nach Anspruch 1 oder 2, **dadurch gekennzeichnet, dass** die plane innere Fläche des Ablenkers einen Winkel zum Schiffsrumpf formt, um zwischen dieser Fläche und dem Rumpf einen Zwischenraum zu erzeugen, der sich in Richtung der Öffnung oder des Hohlraums verengt oder ausweitet.

5. Vorrichtung nach Anspruch 2, **dadurch gekennzeichnet, dass** der Abstand, der den vorderen und den hinteren Ablenker trennt, im Wesentlichen dem Durchmesser der Öffnung oder des Hohlraums entspricht.
